# EUROPÄISCHE PATENTSCHRIFT

(11) **EP 2 780 675 B1**
(45) Veröffentlichungstag und Bekanntmachung des Hinweises auf die Patenterteilung: **19.09.2018**
(21) Anmeldenummer: 12791073.5
(22) Anmeldetag: 15.11.2012
(51) Int. Cl.: G01G 19/02, G01G 3/13, G01L 1/04

(54) **HOHLPROFIL FÜR EINEN WEIGHT-IN-MOTION SENSOR**
HOLLOW PROFILE FOR A WEIGHT-IN-MOTION SENSOR
PROFILÉ CREUX POUR UN CAPTEUR WIM

(30) Priorität: 18.11.2011 CH 18462011
(43) Veröffentlichungstag der Anmeldung: 24.09.2014
(73) Patentinhaber: Kistler Holding AG, 8408 Winterthur (CH)
(72) Erfinder: CORNU, David, CH-6500 Bellinzona (CH); HOFMANN, Adrian, CH-8464 Ellikon am Rhein (CH)
(86) Internationale Anmeldenummer: PCT/CH2012/000251
(87) Internationale Veröffentlichungsnummer: WO 2013/071452

(56) Entgegenhaltungen:
- EP-A1- 0 654 654
- WO-A1-02/08712
- US-A- 5 345 428
- US-A- 5 501 111

## Beschreibung

### Technisches Gebiet

Die Erfindung betrifft ein lang ausgestaltetes Hohlprofil für einen WIM (Weigh in Motion) Sensor umfassend zwei parallel zueinander angeordnete Krafteinleitungsplatten sowie ein zwischen diesen Platten angeordnetes Rohr, das einstückig mit den Platten verbunden ist und einen Hohlraum bildet, wobei innerhalb des Hohlraums von jeder Platte her zwei sich gegenüber liegende Halterungen ausgestaltet sind, zwischen welchen ein Messelement mittig im Rohr unter Vorspannung aufgenommen werden kann und wobei das Rohr zwei spiegelsymmetrisch zueinander ausgestaltete Rohrsegmente aufweist, welche jeweils die Platten miteinander verbinden.und inwendig an den Hohlraum angrenzen.

### Stand der Technik

WIM Sensoren sind zwischen einem und mehreren Metern lange Sensoren, welche in die Strasse eingebaut werden und die dynamischen Bodenreaktionskräfte- der Fahrzeuge messen, um daraus deren Gewicht zu bestimmen. Ein wesentliches Element des Sensors ist das Aluminium- Hohlprofil, in das ein Messelement vorgespannt eingebaut wird. Dafür vorgesehene Halterungen unten und oben gewährleisten dabei den optimalen Kraftfluss durch das Messelement. Das Hohlprofil umfasst ein Rohrteil, welches für die Vorspannung und Abdichtung des Messelements verantwortlich ist. Ein bekanntes Hohlprofil für solche Zwecke ist beispielsweise in der US 5501111 beschrieben. Diese Ausführung besteht aus einem Rohr mit kreisrundem oder sechseckigem Aussendurchmesser und einem inneren Hohlraum, der seitlich, quer zur Krafteinleitungsrichtung, durch gleichmässige Wandstärken umgeben ist und in den Richtungen, in denen die Krafteinleitung erfolgt, inwändig parallele Flächen aufweist zwecks Einspannung von Messelementen. Solche Systeme haben sich als weniger geeignet erwiesen, weil die Krafteinleitung auf das Rohr von aussen wenig genau kontrolliert werden kann.

Ein weiteres bekanntes Hohlprofil für solche Zwecke ist beispielsweise in der EP0654654 beschrieben. Als Erweiterung gegenüber der Ausführung nach US5501111 umfasst die Ausführung nach EP0654654 zwei Krafteinleitungsplatten, zwischen welchen das Rohr angebracht ist. Da diese parallelen Krafteinleitungsplatten etwas mehr als doppelt so breit sind wie das Rohr, ist die Einleitungskraft in dieser Anordnung wohl definiert. Eine Vielzahl von Messelementen, welche durch das Rohr vorgespannt sind, nehmen bei einer Überfahrt die entsprechenden Signale auf. Weiterer Stand der Technik ist durch US5345428 gegeben.

Die Vorspannung des Messelements erzeugt wesentliche Spannungen im Rohrteil. Durch das Überfahren des Sensors im eingebauten Zustand mit schweren Fahrzeugen werden zusätzliche hohe Spannungen im Rohrteil erzeugt. Da dies eine dynamische Belastung ist und bei vielen Überfahrten hohe Lastzyklen erreicht werden, ist das Profil, insbesondere im Bereich des Übergangs vom Rohrteil in die Krafteinleitungsplatten, dem Risiko einer bleibenden Schädigung ausgesetzt. Es hat sich gezeigt, dass herkömmliche Rohrprofile die Betriebslasten von WIM Applikationen nicht aushalten können. Da das Rohrteil einen Kraftnebenschluss bildet, der die Empfindlichkeit des Sensors herabsetzt und somit die Messresultate verschlechtert, sollte es möglichst dünnwandig ausgestaltet sein und nicht unnötig verstärkt werden.

### Darstellung der Erfindung

Aufgabe der vorliegenden Erfindung ist es, ein Hohlprofil eingangs beschriebener Art anzugeben, das den Belastungen im Einsatz länger standhält, ohne die Empfindlichkeit des fertigen WIM-Sensors herabzusetzen. Die Aufgabe wird durch die Merkmale des unabhängigen Patentanspruchs gelöst.

Es hat sich gezeigt, dass dünnere Bereiche an den Rohrsegmenten wie Festkörpergelenke wirken, welche eine Biegung in diesen Bereichen eher zulassen als insbesondere dickere Bereiche, die durch die Verstärkung der Wandstärke versteift wurden. Da an dünneren Stellen weniger Spannungen erzeugt werden beim Biegen als an dickeren Stellen, ist die Lebensdauer erfindungsgemässer Profile höher gegenüber herkömmlichen Hohlprofilen.

Weitere erfindungsgemässe Ausgestaltungen sind in den abhängigen Ansprüchen beschrieben.

### Kurze Beschreibung der Zeichnungen

Im Folgenden wird die Erfindung unter Beizug der Zeichnungen näher erklärt. Es zeigen
- Fig. 1: einen Querschnitt eines WIM Profils nach dem Stand der Technik;
- Fig. 2: einen Querschnitt eines erfindungsgemässen WIM Profils;
- Fig. 3: einen Querschnitt eines erfindungsgemässen Rohrsegments;
- Fig. 4: einen Querschnitt eines erfindungsgemässen Rohrsegments in alternativer Ausführung;
- Fig. 5: den äusseren Übergangsbereich zwischen einem Rohrsegment und einer Krafteinleitungsplatte in einer erfindungsgemässen Ausführung;
- Fig. 6: ein Segment einer erfindungsgemässen Krafteinleitüngsplatte.

### Wege zur Ausführung der Erfindung

Im Folgenden wird die Erfindung unter Bezugnahme auf die Figuren näher beschrieben. Dieselben Bezugszeichen verweisen stets auf dieselben Sachverhalte.

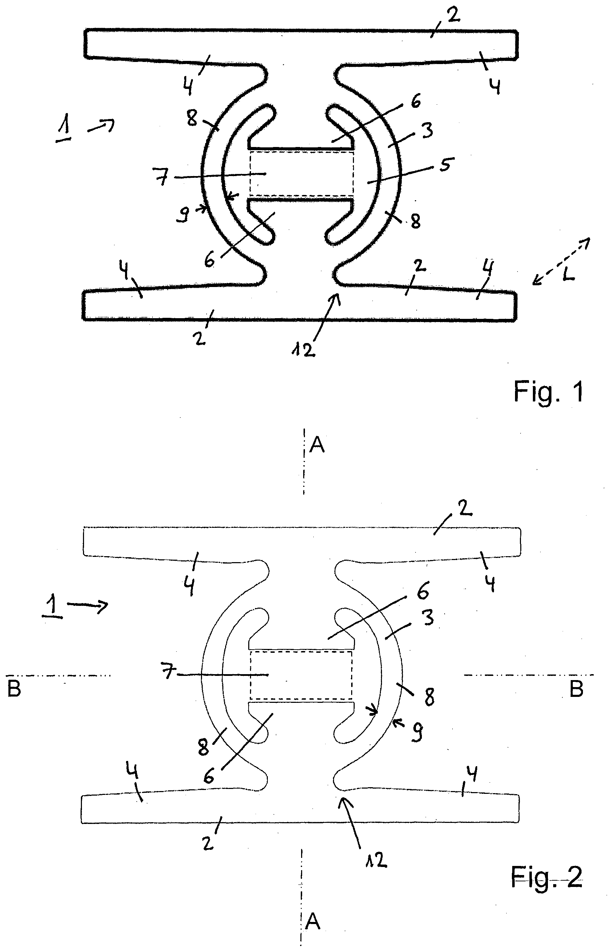

In der Fig. 1 ist ein Hohlprofil 1 eines WIM (Weigh in Motion) Sensors nach dem Stand der Technik im Querschnitt abgebildet. Breite und Höhe solcher Profile sind in der Regel zwischen 50 und 70 mm, während deren hier nicht dargestellte Länge typischerweise zwischen 1m und 4m betragen. Solche Hohlprofile können demnach als lang gegenüber ihrer Querschnittsausdehnungen betrachtet werden.

Das Hohlprofil 1 umfasst zwei parallel zueinander angeordnete Krafteinleitungsplatten 2 sowie ein zwischen diesen Platten 2 angeordnetes Rohr 3. Dieses ist einstückig mit den Platten 2 verbunden und bildet einen Hohlraum 5. Innerhalb des Hohlraums 5 sind von jedex Platte 2 her zwei sich gegenüber liegende Halterungen 6 ausgestaltet. Zwischen diesen Halterungen 6 ist gestrichelt ein Messelement 7 dargestellt. Ein solches Messelement 7 wird für die Fertigstellung des WIM Sensors mittig im Rohr 3 unter Vorspannung zwischen den Halterungen 6 eingesetzt.

Das Messelement 7 ist hier schematisch dargestellt und umfasst in Wirklichkeit eine Vielzahl von Messelementen, insbesondere von piezoelektrischen Messelementen. Diese sind in gleichen Abständen entlang der gesamten Länge des Hohlprofils zentriert zwischen den Halterungen 6 angeordnet, beispielsweise als Platten 2 oder als Plattenpaare 2 übereinander, wie auch in der EP0654654 beschrieben.

Das Rohr 3 weist zwei spiegelsymmetrisch zueinander ausgestaltete Rohrsegmente 8 mit einer Wandstärke 9 auf, welche jeweils die Platten 2 miteinander verbinden und inwendig an den Hohlraum 5 angrenzen.

Die Rohrsegmente 8 sind verantwortlich für die Vorspannung des Messelements 7. Die Vorspannung wird durch eine Überdeckung des Messelements 7 erreicht. Damit diese Überdeckung unter Berücksichtigung der Bauteiltoleranzen überhaupt stabil erreichbar ist, muss sie eine gewisse Grösse aufweisen. Trotzdem darf die Vorspannkraft nicht zu hoch sein. Um dies zu erreichen, sollte die Wandstärke 9 der Rohrsegmente 8 möglichst gering sein.

Bei der Belastung eines WIM Sensors entstehen andererseits aber hohe mechanische Spannungsspitzen, insbesondere im Übergangsbereich der Rohrsegmente 8. Bei einer zu dünnen Wandstärke 9 führen diese Spannungsspitzen zu plastischen Verformungen. Folgen daraus sind veränderte Messeigenschaften des Sensors, Rissentstehung und Ausfall des Sensors. Da dieser fest im Belag einer Strasse eingebaut ist und ein Ersatz mit einer Strassensperre von mehreren Stunden verbunden ist, ist ein Ersatz eines WIM Sensors unter allen Umständen zu vermeiden.

In Fig. 2 ist ein erfindungsgemässes Hohlprofil 1 im Querschnitt dargestellt, welches ebenso aufgebaut ist wie das oben beschriebene Hohlprofil nach dem Stand der Technik, bis auf wenige Unterschiede. Die Komponenten sind im Wesentlichen dieselben und werden daher nicht erneut aufgeführt.

Insbesondere sind in der erfindungsgemässen Ausführung die parallelen Krafteinleitungsplatten 2 um einen Faktor 1.5- bis 3-mal breiter als das zwischen diesen angeordnete Rohr 3. Dadurch ist eine definierte Krafteinleitung eines überfahrenden Fahrzeuges definiert. Da das Rohr 3 im Wesentlichen rund ausgestaltet ist, ist die Verbindung zwischen dem Rohr 3 und den Krafteinleitungsplatten 2 minimal im Vergleich zur Breite der Krafteinleitungsplatten 2. Diese Anbringung führt zu einer gleichmässigen Krafteinleitung auf das Messelement 7, auch wenn die einleitende Kraft seitlich an der Krafteinleitungsplatte 2 angreift.

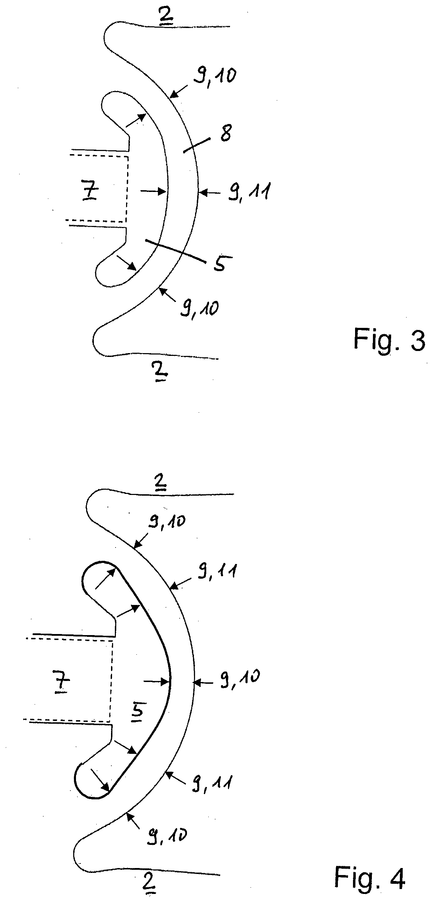

Während die Wandstärke 9 der Rohrsegmente 8 nach dem Stand der Technik in Fig. 1 bis auf deren Bereiche nahe der Platten 2 konstant ist, ist die Wandstärke 9 der erfindungsgemässen Rohrsegmente 8 in der Fig. 2 nicht konstant. Die Wandstärke 9 jedes Rohrsegments 8 weist in der erfindungsgemässen Ausführung mindestens zwei dünnere Bereiche 10 und zwischen diesen einen dickeren Bereich 11 auf, wie in Fig. 3 dargestellt. Durch eine derartig angepasste Profilgeometrie ist der Kraftnebenschluss minimal, auch bei maximaler Belastung, und die Spannungsspitzen liegen unterhalb der kritischen Grösse.

In der erfindungsgemässen Ausführung ist der Querschnitt der Rohrsegmente 8 dahingehend verändert, dass die Spannungsverteilung optimiert wird. Durch einen bionischen Ansatz werden kleine Veränderungen am Profil vorgenommen, die allerdings grosse Auswirkungen auf die lokale Belastung des Materials haben.

In einer ersten bevorzugten Ausführung, dargestellt in Fig. 3, sind die Rohrsegmente 8 anstatt mit einer konstanten Wandstärke 9 so ausgebildet, dass sie auf Höhe des Messelements 7 einen dickeren Bereich 11 aufweisen und sich gegen die Krafteinleitungsplatten hin zu dünneren Bereichen 10 verjüngen. Der dickere Bereich 11 ist versteift und wirkt als Stütze, während die dünneren Bereiche 10 als Festkörpergelenke die Spannungsspitzen gut aufnehmen können, ohne dabei beschädigt zu werden. Vorzugsweise weist die Wandstärke 9 der Rohrsegmente 8 jeweils beidseitig aller dünneren Bereiche 10 dickere Bereiche 11 auf. Bei einer äusseren Krafteinleitung senkrecht auf die parallelen Platten 2 wirken die dünneren Bereiche 11 als Festkörpergelenke. Die dünneren Bereiche 11 wirken beim Vorhandensein eines oder mehrerer Messelemente 7, die zwischen den Halterungen 6 eingespannt sind, als Festkörpergelenke, welche durch deren Elastizität die Vorspannung auf die Messelemente 7 aufbringen. Dazu sollte jeder dünnere Bereich 10 als lokales Minimum ausgestaltet sein, in dem eine dünnste Wandstärke 9 an jeweils an einem Punkt ausgebildet ist, wobei unmittelbar beidseits dieses Punktes die Wandstärke 9 wieder zunimmt.

Die Rohrsegmente 8 weisen im Wesentlichen die Form von Kreissegmenten auf. Wichtig ist auf jeden Fall, dass die Rohrsegmente 8 nicht parallel zueinander verlaufen sondern in sich Krümmungen aufweisen, also in Bogenform verlaufen, denn nur so werden die dünneren Bereiche 11 zu Gelenken. Im anderen Fall, wenn die Rohrsegmente 8 parallel zueinander und im Wesentlichen gerade ausgestaltet wären, würden die dünneren Bereiche 11 nur gedehnt und gestaucht werden, nicht gebogen wie ein Gelenk.

In einer zweiten bevorzugten Ausführung, dargestellt in Fig. 4, sind die Rohrsegmente 8 derart ausgebildet, dass die Wandstärke drei dünnere Bereiche 10 und zwischen diesen zwei dickere Bereiche 11 aufweist. Dadurch entstehen zwei steifere Gebiete 11, welche jeweils beidseits an Festkörpergelenken der dünneren Bereiche 10 angrenzen. Weitere dickere und dünnere Bereiche 10, 11, die jeweils alternierend angeordnet sind, sind ebenfalls denkbar.

Erfindungsgemäss sind die Rohrsegmente 8 in sich spiegelsymmetrisch bezüglich einer Ebene B ausgestaltet, welche parallel zu dem Platten 2 verläuft, mittig durch das Rohr 2. Dadurch wird eine gleichmässige Belastung des später eingesetzten Messelements 7 gewährleistet.

Insbesondere ist auch der Querschnitt des erfindungsgemässen Hohlprofils 1 über die gesamte Länge L des Hohlprofils 1 konstant.

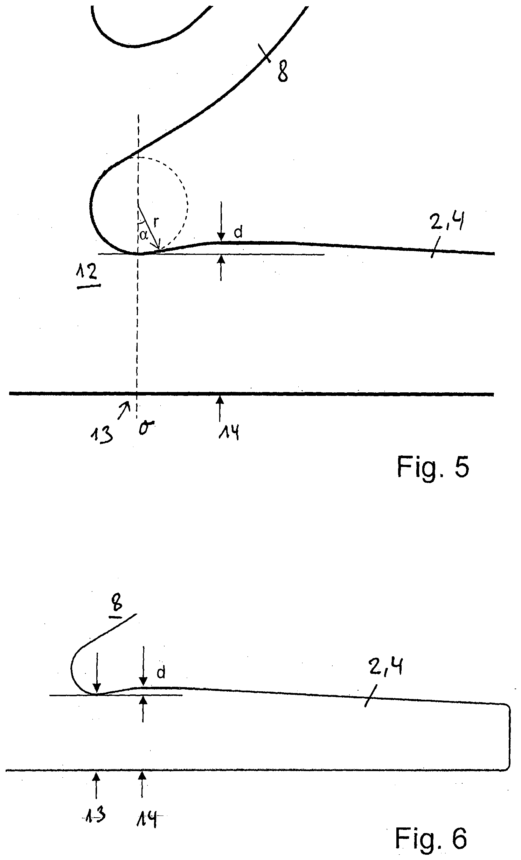

In Fig. 5 ist eine weitere bevorzugte Ausgestaltung des erfindungsgemässen Hohlprofils 1 dargestellt. In dieser Ausführung wird der Übergangsradius vom Rohrsegment 8 zur Krafteinleitungsplatte 2 so ausgestaltet, dass er nicht tangential in die Platte übergeht, wie dies im Stand der Technik ausgeführt war. In der erfindungsgemässen Ausgestaltung ist jeweils der äussere Übergangsbereich 12 zwischen den Rohrsegmenten 8 und den Platten 2 mit einem Innenradius r versehen, wobei jeweils der Innenradius im Bereich der Platte um einen Winkel α weiter ausgestaltet ist als orthogonal zur Plattenausrichtung. Eine entsprechende Orthogonale O ist in Fig. 5 gestrichelt dargestellt. In der Folge davon nimmt die Materialstärke der Krafteinleitungsplatte von der Orthogonalen O her gegen aussen hin zu. So weisen die Querschnitte der Platten 2 in den äusseren Übergangsbereichen 12 zu den Rohrsegmenten 8 jeweils ein lokales Minimum 13 auf und sind gegen aussen anschliessend an einer Stelle 14 um eine Dicke d stärker ausgestaltet.

Die Querschnitte der Krafteinleitungsplatten 2 weisen an diesen Stellen 14 ein lokales Maximum 14 aufweisen und verjüngen sich von dort her gegen aussen, wie in Fig. 6 dargestellt.

Erfindungsgemäss ist das Hohlprofil 1 spiegelsymmetrisch bezüglich einer senkrecht zu den Platten verlaufenden Mittelebene A und/oder bezüglich einer parallel zu den Platten verlaufenden Mittelebene A ausgestaltet. Die angegebenen Ebenen A, B sind in Fig. 2 angegeben. Diese Symmetrien erleichtern einerseits die Herstellung eines Profils 1 und verhindern eine asymmetrische Belastung auf einem später in den Hohlkörper 2 eingesetzten Messelement 7.

In einem weiteren erfindungsgemässen Hohlprofil umfasst dieses bereits das Messelement 7, welches mittig zwischen den Halterungen 6 unter Vorspannung aufgenommen ist, wie in Fig. 2 gestrichelt dargestellt.

Es hat sich gezeigt, dass ein erfindungsgemässes Hohlprofil 1 bereits dann Vorteile aufweist, wenn die Wandstärke 9 der Rohrsegmente 8 mindestens einen dünneren Bereich 10 mit einem lokalen, punktförmigen Minimum aufweist, wobei die Wandstärke 9 unmittelbar beidseits dieses lokalen Minimums wieder ansteigt, wenn dieses Minimum näher an einer ersten Krafteinleitungsplatte 2 angeordnet ist. Bei nur einem Minimum darf dieses daher nicht mittig zwischen den Platten sein. Ein solches Hohlprofil sollte dann derart in die Strasse eingebaut werden, dass diese erste Krafteinleitungsplatte 2 in einer Strasse gegen die Oberseite hin ausgerichtet ist. Abgesehen von den lokalen dünneren Bereichen 10 der Rohrsegmente 8 weisen diese eine konstante und homogene Wandstärke 9 auf. Andere bevorzugte Ausgestaltungen, die im Zusammenhang mit zwei oder mehreren dünneren Bereichen 10 beschrieben wurden, sind ebenso anwendbar mit nur einem dünneren Bereich 10, der näher an einer ersten Krafteinleitungsplatte 2 angeordnet ist wie beschrieben.

Insbesondere kann das Messelement 7 aus einer Vielzahl von Messelementen 7 bestehen, wie in der EP0654654 beschrieben, die zwischen den Halterungen 6 unter Vorspannung aufgenommen sind. Dabei werden die dünneren Bereiche 11 der Rohrsegmente 8 durch das Einsetzen der Messelemente 7 durch Aufbiegen gedehnt, wodurch die Vorspannung aufgebracht ist. Die als Festkörpergelenke wirkenden dünneren Bereiche 11 erzeugen beim Aufbiegen eine Spannung, welche auf die Messelemente 7 wirken. So wird verhindert, dass die Biegung der Vorspannung auf die gesamte Länge der Rohrsegmente 8 verteilt wird. Durch diese Massnahme wird die Lebensdauer des Hohlprofils 1 erhöht.

Durch die hier beschriebenen Veränderungen gegenüber einem Hohlprofil nach dem Stand der Technik werden die hohen Spannungen unter Belastung, die vor allem im Übergangsbereich 12 von der Krafteinleitungsplatte 2 und das Rohrsegment 8 auftreten, besser verteilt. Anstelle einer kritischen Spannungsspitze, die zu plastischer Deformation und Rissbildung führt, sind die Spannungen in der erfindungsgemässen Ausführung besser über das Hohlprofil und insbesondere besser über die Rohrsegmente 8 verteilt und entsprechend kleiner. Dadurch wird die maximal zulässige Belastung des Sensors stark erhöht und die Lebensdauer verlängert.

### Bezugszeichenliste

- 1: Hohlprofil für einen WIM Sensor
- 2: Krafteinleitungsplatten; Platten
- 3: Rohr
- 4: Segment einer Krafteinleitungsplatte, Plattensegment
- 5: Hohlraum
- 6: Halterung
- 7: Messelement
- 8: Rohrsegment
- 9: Wandstärke
- 10: dünnerer Bereich
- 11: dickerer Bereich
- 12: äusserer Übergangsbereich
- 13: lokales Minimum
- 14: Stelle am Plattensegment, lokales Maximum

- A: Ebene, senkrecht zu den Platten verlaufend
- B: Ebene, parallel zu den Platten verlaufend
- L: Länge des Hohlprofils
- O: Orthogonale
- d: Dicke
- r: Radius
- α: Winkel

## Patentansprüche

1. Lang ausgestaltetes Hohlprofil (1) für einen WIM (Weigh in Motion) Sensor umfassend eine erste und eine zweite parallel zueinander angeordnete Krafteinleitungsplatte (2) sowie ein zwischen diesen Platten (2) angeordnetes Rohr (3), das einstückig mit den Platten (2) verbunden ist und einen Hohlraum (5) bildet, wobei innerhalb des Hohlraums (5) von jeder Platte (2) her zwei sich gegenüber liegende Halterungen (6) ausgestaltet sind, zwischen welchen ein Messelement (7) mittig im Rohr (3) unter Vorspannung aufgenommen werden kann und wobei das Rohr (3) zwei spiegelsymmetrisch zueinander ausgestaltete Rohrsegmente (8) aufweist, welche jeweils die Platten (2) miteinander verbinden und inwendig an den Hohlraum (5) angrenzen, **dadurch gekennzeichnet, dass** die Wandstärke (9) jedes Rohrsegments (8) mindestens einen ersten dünneren Bereich (10) mit einem lokalen Minimum aufweist, wobei die Wandstärke (9) unmittelbar beidseits dieses lokalen Minimums wieder ansteigt, und wobei dieses Minimum näher an der ersten Krafteinleitungsplatte (2) angeordnet ist.

2. Hohlprofil nach Anspruch 1, **dadurch gekennzeichnet, dass** die erste Krafteinleitungsplatte (2) dafür vorgesehen ist, im eingebauten Zustand in einer Strasse gegen die Oberseite hin ausgerichtet zu sein.

3. Hohlprofil nach Anspruch 1 oder 2, **dadurch gekennzeichnet, dass**, dass die Wandstärke (9) jedes Rohrsegments (8) mindestens einen zweiten dünneren Bereich (10) und zwischen dem jeweils ersten und zweiten dünneren Bereich (10) einen dickeren Bereich (11) aufweist.

4. Hohlprofil nach einem der vorhergehenden Ansprüche, **dadurch gekennzeichnet, dass** die Wandstärke (9) der Rohrsegmente (8) jeweils beidseitig aller dünneren Bereiche (10) dickere Bereiche (11) aufweist.

5. Hohlprofil nach einem der vorhergehenden Ansprüche **dadurch gekennzeichnet, dass** die dünneren Bereiche (11) beim Vorhandensein eines oder mehrerer Messelemente (7), die zwischen den Halterungen (6) eingespannt sind, als Festkörpergelenke wirken, welche durch deren Elastizität die Vorspannung auf die Messelemente (7) aufbringen.

6. Hohlprofil nach einem der vorhergehenden Ansprüche **dadurch gekennzeichnet, dass** die Rohrsegmente (8) im Wesentlichen die Form von Kreissegmenten aufweisen.

7. Hohlprofil nach einem der vorhergehenden Ansprüche **dadurch gekennzeichnet, dass** die Wandstärke (9) der Rohrsegmente (8) drei dünnere Bereiche (10) und zwischen diesen zwei dickere Bereiche (11) aufweist.

8. Hohlprofil nach einem der vorhergehenden Ansprüche, **dadurch gekennzeichnet, dass** die Rohrsegmente (8) im wesentlichen in sich spiegelsymmetrisch bezüglich einer parallel zu den Platten (2) verlaufenden Ebene (B) ausgestaltet sind.

9. Hohlprofil nach einem der vorhergehenden Ansprüche, **dadurch gekennzeichnet, dass** jeweils der äussere Übergangsbereich (12) zwischen den Rohrsegmenten (8) und den Platten (2) mit einem Innenradius (r) versehen ist, wobei jeweils der Innenradius (r) im Bereich der Platte (2) um einen Winkel (α) weiter ausgestaltet ist als orthogonal zur Plattenausrichtung.

10. Hohlprofil nach Anspruch 9, **dadurch gekennzeichnet, dass** die Querschnitte der Platten (2) in den äusseren Übergangsbereichen (12) zu den Rohrsegmenten (8) jeweils ein lokales Minimum (13) aufweisen und gegen aussen anschliessend an einer Stelle (14) um eine Dicke (d) stärker ausgestaltet sind.

11. Hohlprofil nach Anspruch 10, **dadurch gekennzeichnet, dass** die Querschnitte der Krafteinleitungsplatten (2) an diesen Stellen (14) ein lokales Maximum aufweisen und sich von dort her gegen aussen verjüngen.

12. Hohlprofil nach einem der vorhergehenden Ansprüche, **dadurch gekennzeichnet, dass** es im wesentlichen spiegelsymmetrisch bezüglich einer senkrecht zu den Platten (2) verlaufenden Mittelebene A und/oder parallel zu den Platten (2) verlaufenden Mittelebene (B) ausgestaltet ist.

13. Hohlprofil nach einem der vorhergehenden Ansprüche, umfassend ein Messelement (7) welches mittig zwischen den Halterungen (6) unter Vorspannung aufgenommen ist.

14. Hohlprofil nach Anspruch 13, **dadurch gekennzeichnet, dass** eine Vielzahl von Messelementen (7) zwischen den Halterungen (6) unter Vorspannung aufgenommen sind, wobei die dünneren Bereiche (11) der Rohrsegmente (8) durch das Einsetzen der Messelemente (7) durch Aufbiegen gedehnt werden, wodurch die Vorspannung aufgebracht wird.

15. Hohlprofil nach einem der vorhergehenden Ansprüche, **dadurch gekennzeichnet, dass** die Wandstärke (9), abgesehen von den lokalen dünneren Bereichen (10) eine konstante, und homogene Wandstärke (9) aufweist.

## Claims

1. An elongated hollow profile (1) for a WIM (weigh in motion) sensor comprising first and second force-transmission plates (2) arranged parallel to one another as well as a tube (3) arranged between these plates (2) formed integrally with the plates (2) and forming a hollow space (5) wherein two mounts (6) are formed within said hollow space (5) extending away from each plate (2) and arranged opposite of one another and adapted to receive and hold between them a measuring element (7) centrally within the tube (3) under preload, and wherein the tube (3) comprises two tube segments (8) in a mirror-symmetrical arrangement to each other joining the plates (2) and facing the hollow space (5) with their inner wall, **characterized in that** the wall thickness (9) of each tube segment (8) comprises at least one first thinner region (10) having a local minimum, wherein said wall thickness (9) increases again on both sides of and directly adjacent to this local minimum and wherein said minimum is located closer to the first force-transmission plate (2).

2. The hollow profile according to claim 1, **characterized in that** in its built-in state in a roadway said first force-transmission plate (2) is adapted to be oriented towards the surface.

3. The hollow profile according to claim 1 or 2, **characterized in that** the wall thickness (9) of each tube segment (8) comprises at least one second thinner region (10) and comprises a thicker region (11) between said first and second thinner regions (10).

4. The hollow profile according to any of the preceding claims, **characterized in that** the wall thickness (9) of the tube segments (8) comprises thicker regions (11) on both sides of each of the thinner regions (10).

5. The hollow profile according to any of the preceding claims, **characterized in that** when one or more measuring elements (7) mounted under preload between said mounts (6) are present said thinner regions (11) act as flexure hinges applying the preload onto the measuring elements (7) due to their flexibility.

6. The hollow profile according to any of the preceding claims, **characterized in that** the tube segments (8) have essentially the shape of circular segments.

7. The hollow profile according to any of the preceding claims, **characterized in that** the wall thickness (9) of each of the tube segments (8) comprises three thinner regions (10) and two thicker regions (11) disposed between them.

8. The hollow profile according to any of the preceding claims, **characterized in that** the tube segments (8) themselves are essentially mirror-symmetrical relative to a plane (B) extending parallel to the plates.

9. The hollow profile according to any of the preceding claims, **characterized in that** the outer transition region (12) between each of the tube segments (8) and the plates (2) has an inner radius (r) wherein said inner radius (r) in the area of the plate (2) is increased by an angle (α) compared to the direction orthogonal to the plate direction.

10. The hollow profile according to claim 9, **characterized in that** the cross-sections of each of the plates (2) in these outer transition regions (12) to the respective tube segments (8) comprise a local minimum (13) and are each increased in thickness in the outward direction at a point (14) by a thickness (d).

11. The hollow profile according to claim 10, **characterized in that** the cross-sections of each of the force-transmission plates (2) have a local maximum at these points (14) and are gradually reduced in cross-section from this point in the outward direction.

12. The hollow profile according to any of the preceding claims, **characterized in that** it is essentially mirror-symmetrical relative to a central plane A that extends perpendicularly to the plates (2) and/or to a central plane B that extends parallel to the plates (2).

13. The hollow profile according to any of the preceding claims comprising a measuring element (7) that is received centrally under preload between the mounts (6).

14. The hollow profile according to claim 13, **characterized in that** a plurality of measuring elements (7) are received under preload between the mounts (6) wherein the thinner regions (11) of the tube segments (8) are expanded by bending them open as the measuring elements (7) are inserted whereby the preload is applied.

15. The hollow profile according to any of the preceding claims, **characterized in that** apart from the local thinner regions (10) the wall thickness (9) is of a constant homogenous wall thickness (9).

## Revendications

1. Profil creux (1) de forme allongée pour un capteur WIM (pesage dynamique) et comprenant une première et une seconde plaques d'application de force (2) mutuellement parallèles ainsi qu'un tuyau (3) disposé entre ces plaques (2) formé d'une seule pièce avec les plaques (2) et formant un espace creux (5) dans lequel deux supports (6) opposés sont formés dans l'espace creux (5) à partir de chaque plaque (2) et, entre ces deux supports, un élément de mesure (7) peut être logé sous précontrainte au milieu du tuyau (3), et dans lequel ledit tuyau (3) comprend deux segments (8) de tuyau ayant une symétrie miroir l'un par rapport à l'autre et reliant respectivement les plaques (2) et délimitant vers l'intérieur l'espace creux (5), **caractérisé en ce que** l'épaisseur de la paroi (9) de chaque segment (8) de tuyau comprend au moins une première zone (10) plus mince avec un minimum local, dans lequel ladite épaisseur de la paroi (9) augmente à nouveau des deux côtés directement adjacente à ce minimum local et dans lequel ledit minimum se situe plus proche de la première plaque d'application de force (2).

2. Profil creux selon la revendication 1, **caractérisé en ce qu'**à l'état monté dans une route ladite première plaque d'application de force (2) et adaptée à être orientée vers la surface.

3. Profil creux selon la revendication 1 ou 2, **caractérisé en ce que** l'épaisseur (9) de la paroi de chaque segment (8) de tuyau comprend au mois une seconde zone (10) plus mince et, entre la première et la seconde zones (10) plus minces, une zone (11) plus épaisse.

4. Profil creux selon l'une quelconque des revendications précédentes, **caractérisé en ce que** l'épaisseur (9) de la paroi des segments (8) de tuyau comprend des zones (11) plus épaisses des deux côtés de chacune des zones (10) plus minces.

5. Profil creux selon l'une quelconque des revendications précédentes, **caractérisé en ce que**, quand un ou plusieurs éléments des mesure (7) sont montés sous précontrainte entre les supports (6), les zones (11) plus minces agissent comme charnières appliquant la précontrainte sur les éléments de mesure (7) en raison de leur élasticité.

6. Profil creux selon l'une quelconque des revendications précédentes, **caractérisé en ce que** lesdits segments (8) de tuyau ont essentiellement une forme de segment de cercle.

7. Profil creux selon l'une quelconque des revendications précédentes, **caractérisé en ce que** l'épaisseur (9) de la paroi de chacun de ces segments (8) de tuyau comprend trois zones (10) plus minces et deux zones (11) plus épaisses interposées entre celles-ci.

8. Profil creux selon l'une quelconque des revendications précédentes, **caractérisé en ce que** les segments (8) de tuyau eux-mêmes sont essentiellement d'une symétrie miroir par rapport à un plan (B) s'étendant parallèlement aux plaques.

9. Profil creux selon l'une quelconque des revendications précédentes, **caractérisé en ce que** la région de transition (12) extérieure entre chacun des segments (8) de tuyau et les plaques (2) a un rayon intérieur (r) dans lequel le rayon intérieur (r), dans la région de la plaque (2), est agrandi d'un angle (α) par rapport au sens orthogonal à la direction de la plaque.

10. Profil creux selon la revendication 9, **caractérisé en ce que** les sections transversales de chacune des plaques (2) dans les régions de transition (12) extérieures au segments (8) de tuyau respectifs comprennent un minimum local (13) et s'agrandissent vers l'extérieur à un point (14) par une épaisseur (d).

11. Profil creux selon la revendication 10, **caractérisé en ce que** les sections transversales de chacune des plaques (2) d'application de force comprennent un maximum local à ces points (14) et se diminuent graduellement en section transversale de là vers l'extérieur.

12. Profil creux selon l'une quelconque des revendications précédentes, **caractérisé en ce qu'**il est essentiellement d'une symétrie miroir par rapport à un plan central A s'étendant perpendiculairement aux plaques (2) et/ou un plan central B s'étendant parallèlement aux plaques (2).

13. Profil creux selon l'une quelconque des revendications précédentes comprenant un élément de mesure (7) logé sous précontrainte au milieu entre les supports (6).

14. Profil creux selon la revendication 13, **caractérisé en ce qu'**une pluralité d'éléments de mesure (7) sont logés sous précontrainte entre les supports (6) dans lequel les régions (11) plus minces des segments (8) de tuyau sont dilatées quand les éléments de mesure (7) sont insérés à cause duquel la précontrainte est appliquée.

15. Profil creux selon l'une quelconque des revendications précédentes, **caractérisé en ce qu'**en dehors des zones (10) locales plus minces l'épaisseur (9) de la paroi est d'une épaisseur (9) de la paroi constante, homogène.
